(19)

**Europäisches Patentamt**

**European Patent Office**

**Office européen des brevets**

(11) **EP 4 325 316 B1**

(12) **EUROPEAN PATENT SPECIFICATION**

(45) Date of publication and mention
of the grant of the patent:
**01.10.2025 Bulletin 2025/40**

(21) Application number: **23189837.0**

(22) Date of filing: **04.08.2023**

(51) International Patent Classification (IPC):
**G05D 1/437** (2024.01)　　**B60T 7/12** (2006.01)
**B60T 8/32** (2006.01)

(52) Cooperative Patent Classification (CPC):
**B60T 8/325; B60T 7/12; G05D 1/439;**
B60T 2201/02; B60T 2210/20; B60T 2210/32;
B60T 2210/36; G05D 2105/22; G05D 2107/85;
G05D 2109/22

(54) **METHOD AND APPARATUS FOR CONTROLLING AIRCRAFT GROUND MANOEUVRES**

VERFAHREN UND VORRICHTUNG ZUR STEUERUNG VON BODENMANÖVERN EINES
FLUGZEUGS

PROCÉDÉ ET APPAREIL DE COMMANDE DE MANOEUVRES AU SOL D'UN AÉRONEF

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.08.2022　GB 202212025**

(43) Date of publication of application:
**21.02.2024　Bulletin 2024/08**

(73) Proprietor: **Airbus Operations Limited
Bristol BS34 7PA (GB)**

(72) Inventors:
• **BIDMEAD, Ashley
Bristol, BS34 7PA (GB)**
• **JOHNSON, Mark
Bristol, BS34 7PA (GB)**

(74) Representative: **Abel & Imray LLP
Westpoint Building
James Street West
Bath BA1 2DA (GB)**

(56) References cited:
**EP-A1- 3 118 109　　US-A1- 2008 001 471**

**Description**

BACKGROUND OF THE INVENTION

The present disclosure relates to aircraft ground manoeuvres.

The present invention concerns the automation, or partial automation, of an aircraft while performing ground manoeuvres for example as part of the landing phase of the aircraft. More particularly, but not exclusively, this invention concerns an aircraft ground manoeuvre control unit for an aircraft. The invention also concerns a method for automatically controlling ground manoeuvres of an aircraft

There is a desire to reduce the number of pilots needed to safely fly an aircraft or alternatively to improve aircraft safety. Having a single pilot in the cockpit of an aircraft, brings with it the issue of pilot incapacitation. In order to improve safety in connection with single pilot aircraft operation, it is desirable to provide an autopilot and an auto-land system having the capability to pilot and land the aircraft in the event of pilot incapacitation.

Auto-land already exists on certain of today's aircraft, with systems that ensure autobrake engagement and rudder control. Heading control systems and deceleration control systems already exist but they take into account flight crew input and are not designed for higher speed operations. In order to be suitable for landing the aircraft autonomously, the heading control system must be able to control the aircraft laterally when it is moving at any speed along the ground.

Heading control functions maintain straight heading of an aircraft by changing the nose wheel steering angle in response to 'veering' of the aircraft. This is added to the other aircraft lateral control demands during taxiing.

When controlling aircraft lateral direction, without this heading control function, the flight crew will use the rudder to control the aircraft at high speeds (with small commands of nose wheel steering), and will use nose wheel steering (with small efficiency of the rudder) at low speeds. If one or more of the lateral control systems fail, the flight crew may then use manual differential braking to control the aircraft laterally, for example using the brakes on the wheels of the aircraft with differing levels of braking on the port-side of the aircraft from the level applied at the starboard side. However, if full braking is required to decelerate the aircraft (i.e. maximum braking is applied) then differential braking will not be possible. It is usual therefore for automated systems to use nose wheel steering (at lower speeds) and rudder control (at higher speeds) for lateral control. It is also usual for a pilot to use differential braking manually to control lateral motion only in very specific circumstances.

There are various examples in the prior art of automating aspects of operation of an aircraft that might normally be performed manually by flight crew.

US10081346 discloses a braking control system for an aircraft including a health monitoring system and a task manager for automatically self-reconfiguring the braking control system in the event that the health monitoring system judges a failure of one or more of the braking wheels or sensor signals.

US8108086 discloses an aircraft guidance and piloting system that automatically guides and pilots an aircraft in the event a pilot is unable to guide or pilot the aircraft. The control unit guides and pilots the aircraft to an alternative airport for landing.

US2022/0058970 discloses an autoland system and process for landing an aircraft without pilot intervention.

EP3855269 discloses aircraft systems and methods including determining, based on location data from a navigation system, whether one or more condition have been met enabling arming or an approach mode of the autopilot system.

US2021/0287560 discloses flight guidance methods, systems and aircraft systems providing assist-to-land and emergency land functions.

WO2012/145608 discloses a system for autonomously landing an aircraft which may include a controller configured to land the aircraft at the landing destination.

US8521365 discloses a device including elements for automatically controlling an aircraft on the ground along the lateral axis, by a dissymmetrical use of the engines and/or brakes of the aircraft.

Thus there exist many different systems on an aircraft that assist flight crew in controlling the aircraft on the ground, some of which facilitating automation to varying degrees, but possibly not being able to cope with particular scenarios, especially when the landing of the aircraft is not in ideal conditions for example. There are various ways in which such systems can be used, but there still exist opportunities to improve the way in which such systems integrate multiple functions/requirements of the aircraft's control during landing, to improve automation of aircraft manoeuvres and/or to reduce the need for flight-crew intervention/interaction with aircraft systems that are used in controlling aircraft manoeuvres.

The present invention seeks to mitigate one or more of the above-mentioned problems. Alternatively or additionally, the present invention seeks to provide an improved method or system for controlling ground manoeuvres of an aircraft.

US2008/001471 A1 discloses a differential brake control system which includes processing logic for computing wheel brake commands based on an input brake command indicative of a desired amount of braking. The system also includes differential logic for adjusting the wheel brake command by first and second amounts to produce first wheel and second wheel brake commands, respectively, the first amount being different from the second amount.

EP3118109 A1 discloses a controller for an aircraft steering system configured to receive a steering input representative of a desired direction of travel of a steerable nose landing gear, and to receive one or more force-based inputs representative of lateral forces acting upon the nose landing gear. The controller is adapted to automatically adjust the steering input based on the force-based inputs, to output an adjusted steering command for the nose landing gear.

SUMMARY OF THE INVENTION

According to a first aspect, there is provided an aircraft ground manoeuvre control unit for an aircraft in accordance with claim 1. The aircraft has at least two wheels (e.g. one on either side of the aircraft) and a plurality of control mechanisms for controlling motion of the aircraft including at least two wheel brakes. The control unit is configured to receive lateral input demands, being demands concerning lateral motion of the aircraft, and longitudinal input demands, being demands concerning longitudinal motion of the aircraft. The control unit is configured to pass output demands to the relevant control mechanisms of the aircraft, the output demands being based on the input demands and, for example at least in certain scenarios, including a modification which depends on the risk of a lateral runway excursion and the risk of a longitudinal runway excursion. Thus, in use, it may be that the control unit prioritises one of the lateral input demand and longitudinal input demand in consideration of information (e.g. data and/or risk calculations) regarding such risk(s). It may be that the control unit is configured such that, in certain scenarios, the input demands are passed on as output demands without any modification, whereas in other scenarios it prioritises a part of the input demands based on the risks of a lateral runway excursion and of a longitudinal runway excursion.

In embodiments, the lateral input demands may be provided by a separate system that provides heading control function and the longitudinal input demands may be provided by a separate system that provides a deceleration control function. In such embodiments, it may be advantageous for the heading control function to be able to dictate a level of differential wheel braking, for example in the event of a failure of rudder control and/or nose wheel steering for example. There may then be scenarios where there are different (e.g. conflicting) requirements of the heading control function and the deceleration function. These include when the aircraft is limited by the amount of torque delivered by the brakes (i.e. max pressure is commanded) at the same time as requiring differential braking.

In such embodiments, when the motion of the aircraft on the runway during landing is under the control of the control unit, the control unit prioritises one of the lateral input demand and the longitudinal input demand when calculating the output demand. It does this in a way that allows the lateral input demand and the longitudinal input demand to be combined so as to minimise the risk of excursion of the aircraft from the runway. In order for the control unit to combine the lateral input demand and the longitudinal input demand into a set of output demands to the control mechanisms, it must be able to deal with any conflict between the input demands. If there is a conflict between lateral input demand and the longitudinal input demand, the control unit will prioritise the demands to remove the conflict, and in a manner that takes into account the risks associated with a lateral and/or longitudinal excursion of the aircraft. Such embodiments may advantageously facilitate safer single pilot operations and provide strategies for dealing with pilot incapacitation and/or improve automated aircraft landing systems.

Optionally, the control unit may be configured to calculate the output demand to the wheel brakes by prioritising at least a part of the lateral input demand and the longitudinal input demand based on the availability of other control mechanisms on the aircraft. Such a prioritisation may be based on information regarding the risk of a lateral runway excursion and/or a longitudinal runway excursion. For example, if rudder control is lost before or during landing, greater priority may be given to differential braking (for the purpose of satisfying the lateral input demand) to allow for lateral control of the aircraft during the higher speed parts of the landing phase, than is given to the longitudinal input demand.

It will be understood that prioritising the input demands may include blocking completely one of the input demands in favour of the other. In certain scenarios the function of prioritising the lateral input demand and longitudinal input demand may include modifying one or both of the input demands in order to remove a conflict in the input demands for example providing a compromise that partially favours one of the lateral input demand and longitudinal input demand over the other. The reduction of one or both of the lateral input demand and the longitudinal input demand may be a percentage reduction in the overall authority given to the lateral input demand and/or the longitudinal input demand. The reduction of one or both of the lateral input demand and the longitudinal input demand may be a percentage reduction in the control given to each control mechanism affected by the output demands. The amount of the reduction(s) is calculated by the control unit and may take into account the risk of lateral / longitudinal runway excursions in a manner of different ways. The calculation may for example depend on a calculated probability of a runway excursion and/or a calculated estimate of the most likely speed of the aircraft in the event of such a runway excursion. The calculation may include some dependency that weights the consequences of various future events, for example balancing a predicted level of negative consequences of a lateral excursion at a speed X with a predicted level of negative consequences of a longitudinal excursion at a speed Y. Such an embodiment thus recognises that the consequences of a lateral excursion may be different from the consequences of a longitudinal excursion at a given speed. There may for example be a first critical speed below which the negative consequences of a longitudinal excursion are deemed to be acceptable and a second, different, critical speed below which the negative consequences of a lateral excursion are deemed to be acceptable.

The lateral input demand and the longitudinal input demand may be prioritised based on a ratio, which represents the level of relative prioritisation. The prioritisation ratio may be equal to (or depend on) the ratio of the risk of lateral runway excursion to the risk of longitudinal runway excursion. The prioritisation ratio may be equal to (or depend on) the ratio of predicted lateral excursion speed to predicted longitudinal excursion speed. The prioritisation ratio may be the ratio of a lateral excursion speed parameter to a longitudinal excursion speed parameter. The lateral excursion speed parameter may be based on the predicted lateral excursion speed and a critical lateral excursion speed. For example, if the predicted lateral excursion speed is less than a critical lateral excursion speed, then the lateral excursion speed parameter may be zero; otherwise the lateral excursion speed parameter may be equal to the predicted lateral excursion speed minus the critical lateral excursion speed. The critical lateral excursion speed may be a value greater than 20 knots and may optionally be a value greater than 45 knots - for example around 60 knots +/- 10 knots. Similarly, if the predicted longitudinal excursion speed is less than a critical longitudinal excursion speed, then the longitudinal excursion speed parameter may be zero; otherwise the longitudinal excursion speed parameter may be equal to the predicted longitudinal excursion speed minus the critical longitudinal excursion speed. The critical longitudinal excursion speed may be zero or may be non-zero The critical longitudinal excursion speed may be a value greater than 5 knots and may optionally be a value greater than 15 knots - for example around 30 knots +/- 10 knots. One or both of the critical longitudinal excursion speed parameter and the critical lateral excursion speed parameter may be weighted by a factor.

Embodiments of the invention thus enable the modification of the lateral input demands and longitudinal input demand as a weighted summation that results in output demands that include prioritisation based on runway excursion risk calculations.

The control unit may be configured to receive input data relating to the current state of the control mechanisms of the aircraft. In embodiments it may then use such data to adjust the modification and/or prioritisation that is carried out, for example on the basis of data that one or more control mechanisms are compromised or otherwise not fully functioning or available. The level of priority given to lateral control and to longitudinal control may vary according to the type of control mechanism being controlled. For example, a different prioritisation ratio may be used in relation to the wheel brakes as compared to the spoilers / speed brakes.

The control unit may be configured to identify when the lateral input demand is in conflict with the longitudinal input demand. The control unit may be configured to identify when the lateral input demand is in conflict with the longitudinal input demand by comparing the demands to the availability of the control mechanisms of the aircraft. The control unit may be configured to identify a conflict between the input demands when the lateral input demand is for differential braking and the longitudinal input demand is for braking in both wheel brakes. Thus in embodiments, the control unit is advantageously able to not only identify such conflicts but to remove them, for example by modifying one or both of the input demands before passing them on as output demands, the modification taking into account the risks of runway excursions.

The control unit may be configured to determine the risk of lateral excursions based on the speed of the aircraft (which may be expressed as a velocity vector having a speed and a direction or as the lateral speed of the aircraft, that for example being the component of velocity resolved in the lateral direction) and the distance between the aircraft and the edge of the runway in the lateral direction. The control unit may be configured to determine the risk of longitudinal excursion based on the speed of the aircraft (which may be expressed as a velocity vector having a speed and a direction or as the longitudinal speed of the aircraft, that for example being the component of velocity resolved in the longitudinal direction) and the distance between the aircraft and the edge of the runway in the longitudinal direction. The control unit may receive data relating to the risk of lateral excursion and the risk of longitudinal excursion from other systems on-board the aircraft.

The control unit may be configured to determine the risk of lateral excursion and the risk of longitudinal excursion based on the response required by the control mechanisms to meet the lateral input demand, the longitudinal input demand and/or the combination thereof. For example, in use, it may be that the control unit determines the risk of lateral excursion and the risk of longitudinal excursion based on whether the response required to meet the lateral demand and the longitudinal demand simultaneously is within the capability of the control mechanisms of the aircraft.

The control unit may be configured to identify when the lateral input demand and the longitudinal input demand cannot be fully met by the control mechanisms of the aircraft.

The control unit may be configured to provide prioritisation by applying a limit on the authority of one input demand over the other input demand.

The control unit may be configured to balance the risk of a longitudinal excursion and the risk of a lateral excursion to calculate the output demand that will reduce, and preferably minimise, the overall risk.

The control unit may be configured to output a demand to a starboard wheel brake (or brakes) and the port wheel brake (or brakes) that is a summation of the lateral input demand and the longitudinal input demand, e.g. as modified by the prioritisation carried out by the control unit.

As mentioned above, the control unit is configured to receive a lateral input demand and to send an output demand to one or more control mechanisms of the aircraft, which for lateral control may include steering control mechanisms such as a rudder steering mechanism and a nose-wheel steering mechanism. The control unit may be configured to determine that at least one of the rudder steering mechanism and the nose-wheel steering mechanism is not fulfilling the output demand, and consequently, to send an output demand to one or more of a port wheel brake and a starboard wheel brake to assist with lateral control. An advantage of embodiments of this aspect of the invention may be that the control unit is able to support single pilot operations. The control unit may allow an auto-land system to control the aircraft during higher speed manoeuvring of the aircraft.

The control unit may receive input demands from a first control system and a (e.g. separate and/or at least partially independent) second control system. The control unit may be configured to receive lateral input demands from the first control system, which may for example be in the form of a heading control system. The control unit may be configured to receive longitudinal input demands from the second control system, which may for example be in the form of a deceleration control system. As noted above, the control unit may be configured to send an output demand to the control mechanisms of the aircraft. The control unit may be configured to apply authority limits to one or both of the first control system and the second control system, thus limiting the associated output demands. In such a case, the control unit calculates the authority limits based on the risks of (including the risks associated with) a lateral runway excursion and the risks of (including the risks associated with) a longitudinal runway excursion.

The control unit may be part of an auto-land system. The auto-land system may include a heading control system and a deceleration control system.

The present invention provides, according to a second aspect, an aircraft having a ground manoeuvre control unit, the control unit being in accordance with the invention as described or claimed herein. Thus, the control unit may be connected with wires, and/or via wireless communication, to receive inputs - relating the lateral and longitudinal input demand from other systems on the aircraft - and to send outputs to effect control of one or more control mechanisms of the aircraft.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and more preferably more than 50 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more.

The wheel brakes on the aircraft may include one or more brake packs, which cause braking via friction. The wheel brakes on the aircraft may include one or more brakes, which cause deceleration at least in part by magnetic forces.

The present invention provides, according to a third aspect, a method for automatically controlling ground manoeuvres of an aircraft in accordance with claim 13. Such a method may include the use of a control unit according to the invention as described or claimed herein. The method may comprise steps of the aircraft moving along a runway surface; the control unit receiving a lateral input demand; the control unit receiving a longitudinal input demand; and the control unit calculating an output demand in dependence on the lateral and longitudinal input demands, such an output demand being used to effect control of one or more control mechanisms of the aircraft. There may be a step of prioritising the demands received when there is a conflict between those demands. Such a prioritisation may be calculated, or otherwise derived, in dependence on a parameter or variable relating to the risk of a lateral runway excursion and a parameter or variable relating to the risk of a longitudinal runway excursion.

Prioritisation may involve the control unit applying a limit on the authority of one demand over the other demand based on the risk of lateral runway excursion and the risk of longitudinal runway excursion. The control unit may be configured to determine that there is a conflict between the lateral input demand and the longitudinal input demand by calculating that the combination of the lateral and the longitudinal demand cannot be fulfilled by the control mechanisms of the aircraft.

The method may include the control unit sending an output demand to one or more first steering control mechanisms, the first steering control mechanisms being a rudder steering mechanism and a nose-wheel steering mechanism. The method may include the control unit receiving data from sensors on board the aircraft that indicates that at least one of the first steering control mechanisms is not fulfilling the output demand. The method may include the control unit calculating an output demand in dependence on the lateral and longitudinal input demands, prioritising the demands received when there is a conflict between those demands, the prioritisation depending on the risk of lateral runway excursion and the risk of longitudinal runway excursion. The method may then include the control unit passing an appropriately modified output demand to steering control mechanisms of the aircraft including, in particular, the wheel brakes of the aircraft.

The present invention also provides a method of automatically landing an aircraft including controlling the lateral motion of the aircraft relative to a runway with a first control system and controlling the longitudinal motion of the aircraft relative to a runway with a second control system. The first and second control systems may be formed by separate control modules embodied in software and installed on the same computer system on the aircraft. The method of this aspect resolves a conflict between the first control system and the second control system by means of apportioning control of the motion of the aircraft on the basis of balancing a risk associated with an excursion of the aircraft from the runway laterally and a risk associated with an excursion of the aircraft from the runway longitudinally.

In some embodiments, at the end of the braked stop, if the pilot is incapacitated a full normal brake application can be applied and held to prevent any motion of the aircraft until it is recovered.

As alluded to above, the invention may be at least partly embodied in software. As such, there may be provided a computer-implemented method wherein the method includes a computer performing those steps that are carried out by the control unit of the invention as described or claimed herein. For example, such a computer-implemented method may includes steps of a computer receiving lateral input demands and longitudinal input demands, and sending output demands which include a modification derived by prioritising a part of the input demands based on the risk of a lateral runway excursion and the risk of a longitudinal runway excursion. Such a method may include a step of assessing (e.g. by calculating) a lateral runway excursion risk parameter and a longitudinal runway excursion risk parameter. There may also be provided a computer program product comprising instructions which, when the program is executed by a computer, cause the computer to carry out the steps of such a computer implemented method.

It will of course be appreciated that features described in relation to one aspect of the present invention may be incorporated into other aspects of the present invention. For example, the method of the invention may incorporate any of the features described with reference to the apparatus of the invention and *vice versa.*

DESCRIPTION OF THE DRAWINGS

Embodiments of the present invention will now be described by way of example only with reference to the accompanying schematic drawings of which:

Figure 1 shows a top down view of an aircraft according to an embodiment of the invention;

Figure 2 shows a front view of the aircraft of Figure 1;

Figure 3 shows a schematic view of an aircraft system including a ground manoeuvre control unit for use on the aircraft of Figures 1 and 2;

Figure 4 shows a schematic view of an aircraft system including a ground manoeuvre control unit according to a further embodiment of the invention;

Figure 5 shows a schematic view of the aircraft system of Figure 4 with a modification;

Figure 6 shows a schematic view of the aircraft system of Figure 5 with a modification;

Figure 7 shows a flow diagram showing an example of a method for automatically controlling ground manoeuvres of an aircraft according to another embodiment of the invention; and

Figure 8 shows a flow diagram showing an example of a method for automatically controlling ground manoeuvres of an aircraft according to yet another embodiment of the invention.

DETAILED DESCRIPTION

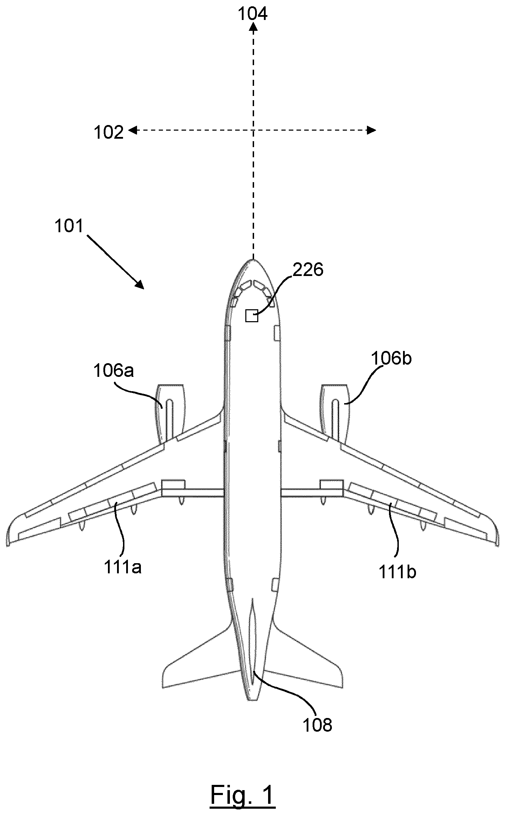

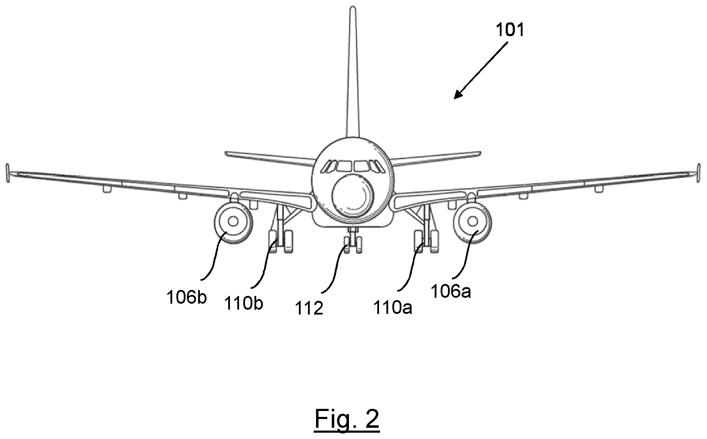

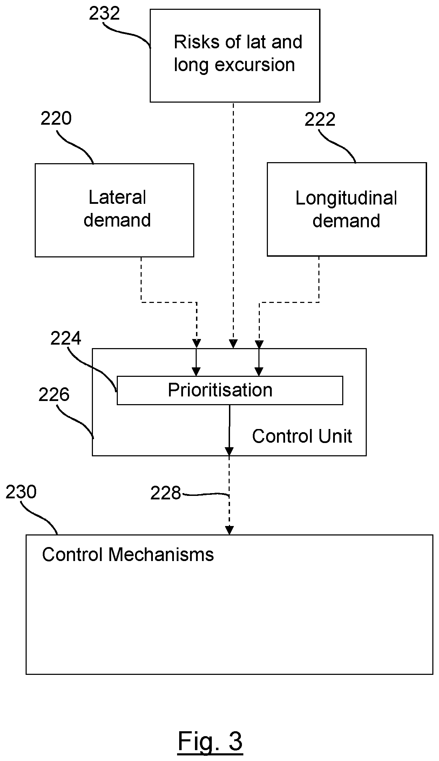

Figure 1 shows a top down view of an example aircraft 101 according to an embodiment of this invention. The aircraft 101 comprises a ground manoeuvre control system as described in relation to Figure 3. A dashed line 102 indicates the lateral direction in relation to the aircraft. Any reference to "lateral movement" in relation to the illustrated embodiments refers to the component of movement of the aircraft in the direction of line 102. Dashed line 104 indicates the longitudinal axis of the aircraft. Any reference to "longitudinal movement" in relation to the illustrated embodiments refers to the component of movement of the aircraft along axis 104. The aircraft 101 is a commercial passenger jet. The aircraft 101 has a number of control mechanisms including the engines 106a and 106b, the rudder 108 and the spoilers 111a and 111b. Figure 2 shows a front view of aircraft 101 according to this embodiment. The aircraft 101 includes a nose wheel 112 which is part of the nose-wheel steering mechanism. The aircraft 101 includes a starboard-side wheel brake 110b (on the left-hand side of Figure 2) and a port-side wheel brake 110a (on the right-hand side of Figure 2). The engines 106a and 106b, the spoilers 111a and 111b, and the wheel brakes 110a and 110b, can be used to control the longitudinal movement of the aircraft along a runway during ground manoeuvres. The rudder 108, the nose wheel steering 112 and the wheel brakes 110a and 110b can be used to control the lateral movement of the aircraft along the runway during ground manoeuvres. The wheel brakes 110a and 110b can be used to provide differential braking to control the aircraft laterally. At high speeds lateral control may be best provided by the rudder, whereas at lower speeds, the nose wheel may be preferred. Differential braking may be used as a back-up or supplementary control mechanism for lateral control. For deceleration control, the spoilers are most effective at high speeds, and thrust reversers using engine power may be used as a back-up, an optional or a supplementary control mechanism for lateral control. At lower speeds, wheel braking is the dominant mechanism for decelerating the aircraft.

As noted above, the aircraft of the embodiment shown in Figures 1 and 2 includes an aircraft ground manoeuvre control system which is illustrated schematically by Figure 3. The aircraft ground manoeuvre control system is configured to assist in the automated (or partially automated) landing of the aircraft on a runway and subsequent taxiing manoeuvres. This can facilitate automated landing of an aircraft, which in turn could allow pilotless aircraft operation, operation with reduced flight crew (e.g. fewer pilots) and/or function as an enhanced safety feature in the event of incapacity of the pilot(s). In the context of automated landing of an aircraft, it is of the utmost importance to avoid if at all possible a situation in which the aircraft veers off the runway surface (a lateral excursion) or overruns the runway surface (a longitudinal excursion). In the event that an excursion is or becomes unavoidable, it is desirable to minimise the negative consequences of such an event. As will be explained in further detail below, the aircraft ground manoeuvre control system operates in use to manage and reduce the risk of a runway excursion including managing and reducing the impact of any negative outcomes that might follow from a lateral excursion and / or a longitudinal excursion.

The control unit 226 interacts with a number of control mechanisms 230 of the aircraft for controlling the motion of the aircraft when landing/taxiing. In this embodiment the control unit 226 is computer implemented, being implemented in a computer system of the aircraft by computer software. In use, the control unit 226 receives lateral input demands 220, being demands (from a system, pilot, auto-pilot or the like) relating to the lateral movement of the aircraft (i.e. for implementing desired movement or change in lateral movement of the aircraft) and receives longitudinal input demands 222, being demands relating to the longitudinal movement of the aircraft. The control unit 226 also receives input data 232 relating to the risk of longitudinal excursion of the aircraft and the risk of lateral excursion of the aircraft. Such risk may be provided as probability of excursion, predicted speed and/or direction of motion of the aircraft when at the boundary of the runway surface, the probability of a lateral excursion (and/or longitudinal excursion) exceeding a certain speed, or other measures of risk.

The control unit 226 is connected for two-way communication with the control mechanisms 230 of the aircraft, both sending commands to control movement / positions / actuation of the control mechanisms 230 and receiving information on the actual movement / positions / actuation status of the control mechanisms 230. In use, the control unit 226 sends an output demand 228 to the control mechanisms, the output demand 228 being determined in dependence on the lateral input demand 220, the longitudinal input demand 222, the risks associated with a lateral excursion and with a longitudinal excursion 232, and the current status of the control mechanisms 230. In certain scenarios, the control unit 226 prioritises one of the lateral input demand 220 and the longitudinal input demand 222, over the other, based on the risk of lateral runway excursion and the risk of longitudinal runway excursion 232. For example, if there is deemed to be a high risk of there being a lateral runway excursion but a low risk of a longitudinal runway excursion then the control unit will prioritise the lateral input demand over the longitudinal input demand 222. In another example, it may be that there is a first outcome in which there is a longitudinal excursion beyond the end of the runway (but no lateral excursion), at say at least 40 knots, and a second outcome in which there is a lateral excursion off the side of the runway (but no longitudinal excursion), at say at least 50 knots, and the risks are such that it is very likely that only one of those two outcomes can be avoided. The control unit 226 assesses the risk and deems that the negative impact of the first outcome is worse than the negative impact of the second outcome, and as such prioritises the longitudinal input demand 222 over the lateral input demand 220. This can be considered as an example of the control unit passing on the longitudinal input demand without any modification, but reducing the lateral input demand to give it less priority or reduce its impact to zero, or close to zero.

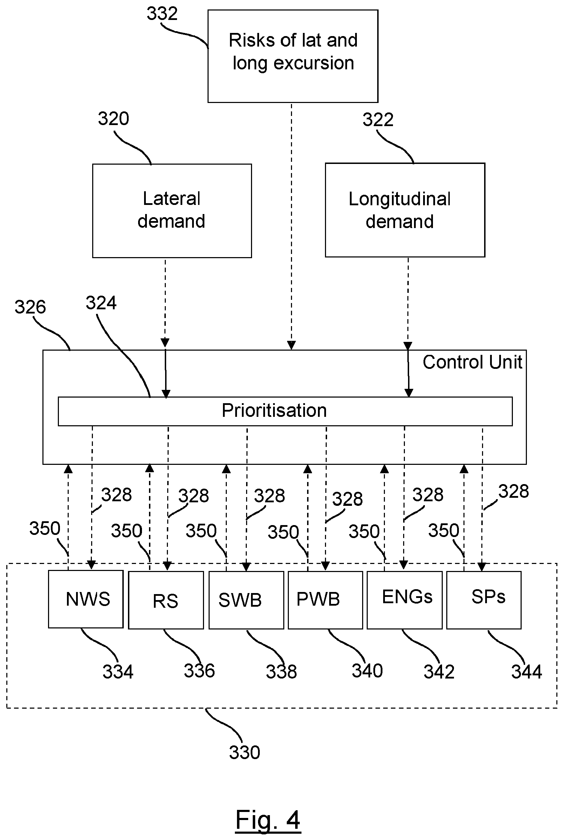

Figure 4 shows a schematic view of an aircraft ground manoeuvre control unit 326 according to another embodiment of the invention. The main differences between this embodiment and the one shown in Figure 3 will now be described.

The control unit 326 is configured to receive lateral input demands 320 and longitudinal input demands 322, and to receive input data 332 relating to the risk of longitudinal excursion of the aircraft and the risk of lateral excursion of the aircraft. The control unit 326 is also configured to send output demands 328 to multiple different control mechanisms 330 and to receive feedback inputs 350 from those control mechanisms 330.

Thus, in use, the control unit 326 sends output demands 328 to a nose wheel steering system 334 (labelled as NWS) and receives signals 350 from the nose wheel steering system 334 indicating the current status (e.g. rotational position) of the nose wheel steering system and its availability (e.g. failed, partially compromised or operational) to respond to a lateral demand. The control unit 326 is also configured to send signals 328 to a rudder steering system 336 (labelled as RS) and to receive signals 350 from the rudder steering system 336 indicating the current status of the rudder and its availability (e.g. failed, partially compromised or operational) to respond to a lateral demand. The control unit 326 is configured to send signals 328 to a starboard wheel brake 338 (labelled as SWB) and a port wheel brake 340 (labelled as PWB) and to receive signals 350 from the starboard wheel brake system 338 and the port wheel brake system 340 indicating the current status of the brakes and their availability to respond to a lateral demand (e.g. differential braking) or longitudinal braking demand. The control unit 326 is also configured to send signals 328 to engines 342 (labelled as ENGs) of the aircraft and to receive signals 350 from the engines 342 indicating their current status. The control unit 326 is also configured to send signals 328 to one or more spoiler systems 344 (labelled as SPs) of the aircraft and to receive signals 350 from the spoiler systems 344 of the aircraft indicating the current status of the spoilers and their availability to respond to a longitudinal demand.

In use, the control unit 326 determines the signals, in the form of a set of output demands 328, to output to the control mechanisms 330. It does this on the basis of the received lateral input demand 320, the received longitudinal input demand 322, a measure of risk as calculated by the control unit 326 of, and associated with, a possible lateral excursion and a possible longitudinal excursion 332, and the availability (or fail-status) of the control mechanisms 330. In many scenarios, where all control mechanisms 330 are fully available (no failures) and there is no conflict as between the received lateral input demand 320 and the received longitudinal input demand 322, and negligible risk of or associated with a runway excursion, the control unit 326 passes on without modification the lateral input demand 320 and the longitudinal input demand 322 to the control mechanisms 330. In other scenarios, the control unit 326 passes on the lateral input demand 320 and the longitudinal input demand 322 to the control mechanisms 330 of the aircraft, but with an appropriate modification. The control unit 326 is configured to prioritise one or other (and to an appropriate level) the lateral input demand 320 and the longitudinal input demand 322 when the demands cannot be completely fulfilled simultaneously by the control mechanisms 330 of the aircraft. In this embodiment, the control unit 326 may be considered as including a prioritisation filter 324 such that in use the lateral input demand 320 and the longitudinal input demand 322 pass through the prioritisation filter 324 which weights the demands based on the availability of control mechanisms 330 of the aircraft and the calculated measure of risks associated with a lateral runway excursion and a longitudinal runway excursion of the aircraft 332. It will be appreciated that the receiving of input demands, the sending of output demands, and the modification of the demands as calculated by the control unit is a dynamic process such that the modification, if provided, will typically vary over time, during ground manoeuvres of the aircraft.

An example of how the control unit 326 of Figure 4 might operate in a particular scenario, where there is a failure and also conflict between the lateral input demand 320 and the longitudinal input demand 322, will now be described. The scenario is one in which the nose wheel steering mechanism has experienced a failure and therefore is not available to respond to a lateral demand. The control unit is configured to take into account the availability of the control mechanisms 330 in calculation of the output demands 328. Since the nose wheel steering mechanism 334 is unable to provide lateral control to the aircraft, the starboard wheel brake and the port wheel brake can be used to provide differential braking to laterally control the aircraft. In this example, the lateral input demand requires greater braking in the starboard wheel brake than in the port wheel brake. The longitudinal input demand is for full brake power in both the starboard wheel brake and the port wheel brake. The control unit identifies that the lateral input demand and the longitudinal input demand are conflicting and therefore cannot be fulfilled simultaneously by the control mechanisms 330 of the aircraft. The control unit 326 determines the output demand 328 by passing the lateral input demand 320 and the longitudinal input demand 322 through the prioritisation filter 324 which prioritises the demands based on the risk of lateral runway excursion and the risk of longitudinal runway excursion 332. The control unit 326 is configured to pass an output demand 328 to the control mechanisms 330 of the aircraft. It may be that at least for some of the landing phase after touch-down - particularly where rudder control no longer has such a strong influence on heading direction / lateral movement - the control unit grants greater authority to the lateral input demand and limits the authority of the longitudinal input demand until such time as the risk of a lateral excursion has been reduced to an acceptable level.

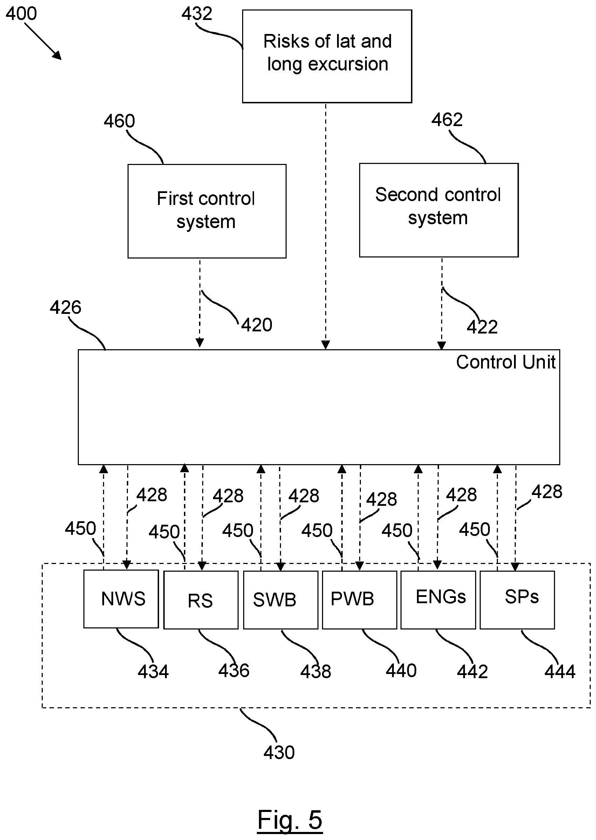

Figure 5 shows a schematic view of an aircraft system 400 including a ground manoeuvre control unit 426 according to another embodiment of the invention. The system is suitable for use on an aircraft such as that shown in Figures 1 and 2. The aircraft system 400 includes a first control system 460 which is configured to send a lateral input demand 420 to the control unit 426. The aircraft system 400 includes a second control system 462 which is configured to send a longitudinal input demand 422 to the control unit 426. The first control system 460 is a heading control system. The second control system 462 is a deceleration control system. The control unit 426 receives input data 432 relating to the risk of lateral excursion of the aircraft 101 and the risk of longitudinal excursion of the aircraft 101. The control unit 426 is configured to output demands 428 to the control mechanisms 430. Similarly to the arrangement shown in Figure 4, the control mechanisms 430 include a nose wheel steering mechanism 434, starboard wheel brake 438, port wheel brake 440, engines 442, and spoilers 444. The control unit 426 is configured to receive signals 450 from the control mechanisms 430 indicating their current status. The control unit is configured to calculate the output demands 428 to the control mechanisms 430 based on the lateral input demand 420, the longitudinal input demand 422, the risk of lateral runway excursion and the risk of longitudinal runway excursion 432, and the status of the control mechanisms 430. In certain scenarios, the control unit issues output demands 428 effectively by passing on, without modification, the lateral demand 420 and the longitudinal demand 422 to the control mechanisms. In certain other scenarios, the control unit is configured to apply limits on the authority of the first control system 460 in comparison to the authority of the second control system 462 and thus the output demands 428 are different from the input demands received. The limits are determined by the control unit 426 in dependence on the risk of lateral runway excursion and the risk of longitudinal runway excursion 432. It will be appreciated here that the risk of lateral runway excursion may be a calculated measure of risk taking into account the likely probability of an excursion, the likely speed at which the excursion would occur, and the likely consequences of such an excursion.

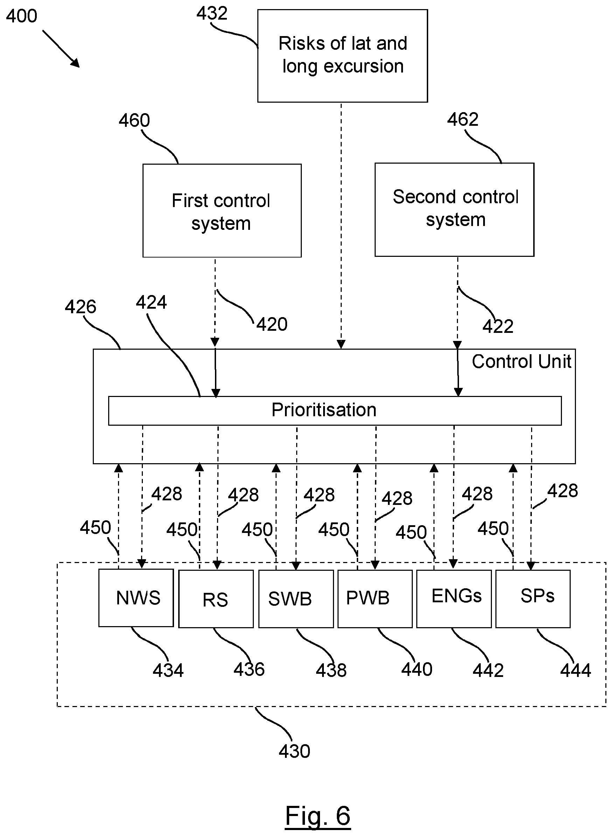

Figure 6 shows a schematic view of an aircraft system including a ground manoeuvre control unit 426 according to an embodiment similar to the embodiment described in relation to Figure 5. In this embodiment, however, the control unit 426 may be considered as including a prioritisation filter 424. Thus, the control unit 426 is configured to pass the lateral input demand 420 and the longitudinal input demand 422 through the prioritisation filter 424 and the prioritisation filter 424 applies a weighting to the demands based on the availability of control mechanisms 430 of the aircraft and the risks associated with lateral and longitudinal excursion of the aircraft 432. The control unit 426 is configured to continuously monitor the input signals 450 from the control mechanisms 430, and recalculate the output demands 428. The weighting of the outputs relative to the input demands, insofar as wheel braking is concerned, may be as follows:

$$\mathrm{OUT_{Star}} = \alpha\ \mathrm{LAT\_DEM_{Star}} + \beta\ \mathrm{LON\_DEM_{Star}}$$

$$\mathrm{OUT_{Port}} = \gamma\ \mathrm{LAT\_DEM_{Port}} + \delta\ \mathrm{LON\_DEM_{Port}}$$

where:

$\mathrm{OUT_{Star}}$ is the output demand of wheel braking on the starboard side, which is less than or equal to the full amount of braking possible on the starboard side,

$\mathrm{OUT_{Port}}$ is the output demand of braking on the port side, which is less than or equal to the full amount of braking possible on the port side,

$\mathrm{LAT\_DEM_{Star}}$ is the input demand of braking on the starboard side for lateral control, typically expressed as a desired change in braking level being positive or negative and of an opposite sign to $\mathrm{LAT\_DEM_{Port}}$,

$\mathrm{LAT\_DEM_{Port}}$ is the input demand of braking on the port side for lateral control, typically expressed as a desired change in braking level being positive or negative and of an opposite sign to $\mathrm{LAT\_DEM_{Star}}$,

$\mathrm{LON\_DEM_{Star}}$ is the input demand of braking on the starboard side for longitudinal control, typically expressed as a desired absolute braking level, $\mathrm{LON\_DEM_{Port}}$ is the input demand of braking on the port side for longitudinal control, typically expressed as a desired absolute braking level, and

$\alpha$, $\beta$, $\gamma$, $\delta$ are weighting factors, such that the ratio $(\alpha + \gamma) : (\beta + \delta)$ is a measure of the weighting of the lateral demand versus the longitudinal demand.

Depending on the scenario, the ratio of the weighting factors is determined by reference to a ratio concerning the "predicted speed of a lateral excursion" to "predicted speed of a longitudinal excursion". Thus, the higher the risk (or speed) of a longitudinal excursion relative to the corresponding risk (or speed) of a lateral excursion, the greater proportion of authority is given to the longitudinal demand (longitudinal demand getting a greater priority than lateral demand).

It may be that $\alpha = \gamma$ and $\beta = \delta$. In some scenarios, it may be that $\alpha < 100\%$, $\beta < 100\%$, $\gamma < 100\%$, and $\delta < 100\%$, such that less than full authority is granted to both the lateral control demands and the longitudinal control demands. In other scenarios (no limit on authority necessary), it may be that $\alpha = \beta = \gamma = \delta = 100\%$.

Various scenarios are able to be dealt with by the embodiment of Figure 6, some of which will now be described, by way of example.

Scenario 1

The deceleration control system 462 determines that there is a low risk of longitudinal runway excursion as the deceleration rate currently being provided by the control mechanisms 430 of the aircraft is sufficient to bring the aircraft to a halt without excursion. The heading control system 460 determines that there is a low risk of lateral excursion as the rudder steering mechanism 436 and the nose wheel steering mechanism 434 are able to fulfil the lateral demand required to avoid lateral runway excursion. The control unit 426 receives a lateral input demand 420 from the heading control system 460. The control unit 426 receives a longitudinal input demand 422 from the deceleration control system 462. The control unit 426 passes the lateral input demand 420 and the longitudinal input demand 422 directly to the control mechanisms 430. Both the heading control system 460 and the deceleration control system 462 maintain full authority over the control mechanisms 430 as no authority limits are imposed by the control unit 426. Thus, in this case, $\alpha = \gamma = \beta = \delta = 100\%$.

Scenario 2

The deceleration control system 462 issues a longitudinal demand 422 to the control unit 426. The heading control system 460 issues a lateral demand 420 to the control unit 426. The control unit 426 passes a lateral demand scaled by a first factor to the rudder steering mechanism 436. The control unit 426 passes a lateral demand scaled by a second factor to the nose wheel steering mechanism 434. The control unit 426 determines the first factor and the second factor based on the ground speed of the aircraft. The control unit 426 issues a longitudinal demand to the wheel brakes 438 and 440. There is then a failure that causes loss of the rudder steering mechanism 436. The heading control system 460 issues a lateral demand 420 to the control unit 426. The control unit 426, having received an indication that the rudder is no longer available mechanism, calculates an appropriate level of lateral demand to pass on to the nose wheel steering mechanism 434, this being scaled by a third factor (which may - or may not - be equal to the second factor). The control unit 426 also calculates an output demand for differential braking so as to assist with fulfilling the lateral demand 420, that can not be satisfied by the nose-wheel steering mechanism 434. Thus the output demand calculated by the control unit 426 and sent to the starboard wheel brake 438 and the port wheel brake 440 for braking both meets the (differential braking) lateral demand 420 so required and the longitudinal demand 422. It may still be the case, that $\alpha = \gamma = \beta = \delta = 100\%$, because despite the loss of rudder control, both the lateral control demands and longitudinal control demands can be met by the brakes.

Scenario 3

The heading control system 460 determines that there is a low risk of lateral runway excursion. The heading control system 460 issues a demand for the starboard wheel brake 438 and the port wheel brake 440 together to provide a low level of differential braking to laterally control the aircraft. The deceleration control system 462 determines that there is a high risk of longitudinal excursion as the deceleration rate achieved by the aircraft with the control mechanisms 430 in their current state is not sufficient to stop the aircraft overrunning the edge of the runway in the longitudinal direction. This might be due to any of multiple reasons including, for example, adverse runway conditions, adverse weather conditions, mechanical failure, and/or an unstable approach. The deceleration control system 462 issues a demand 422 for full braking in both the starboard wheel brake 438 and the port wheel brake 440. The control unit 426 applies authority limits to the demands of the heading control system 460 and the deceleration control system 462. The authority limits are determined by the control unit 426 based on the risk of lateral runway excursion and the risk of longitudinal runway excursion 432. Given the high risk of longitudinal excursion and the low risk of lateral excursion, the control unit applies authority limits that block the authority of the heading control system to send demands to the starboard wheel brake 438 and the port wheel brake 440. The wheel brakes receive a demand for full braking in both the starboard wheel brake 438 and the port wheel brake 440 as the control unit 426 has given full authority to the deceleration control system 462. Thus, in this case $\alpha = \gamma = 0\%$ and $\beta = \delta = 100\%$.

The control unit 426 continuously receives input data relating to the risk of lateral and longitudinal excursion 432. The control unit 426 continuously receives signals from the control mechanisms 430 indicating their current status. The control unit 426 alters or removes the original authority limits in dependence on the continually updated calculations of risk associated with lateral and longitudinal runway excursion. Over time, it may then be the case that the control unit limits the authority such that $\alpha = \gamma = 10\%$ and $\beta = \delta = 90\%$.

Scenario 4

The deceleration control system 462 determines that there is a low risk of longitudinal excursion as the deceleration rate achieved by the aircraft is sufficient to avoid the aircraft overrunning the edge of the runway longitudinally. The heading control system 460 determines that there is a high risk of lateral excursion as the heading control system 460 is having to demand a high level of differential braking to control the aircraft laterally in addition to use of the nose wheel steering mechanism 434 and the rudder steering mechanism 436. The control unit 426 receives the lateral input demand 420 from the heading control system 460 and the longitudinal input demand 422 from the deceleration control system 462. The control unit 426 applies authority limits to the demands from the heading control system 460 and the deceleration control system 462. The authority limits are determined by the control unit 426 based on the risk of lateral runway excursion and the risk of longitudinal runway excursion 432. Given the high risk of lateral runway excursion the control unit limits the authority of the deceleration control system to block any demand of braking of the starboard wheel brake 438 and the port wheel brake 440 that would conflict with the demands of the heading control system 460. The wheel brakes receive a demand for differential braking as the control unit 426 has given full authority to the heading control system 460. Thus, in this case $\alpha = \gamma = 100\%$ and $\beta = \delta$ with $\beta < 100\%$ and $\delta < 100\%$. By way of example, if the level of wheel braking can be represented by a sliding scale or 0.0 to 10.0 on both the port side and the starboard side, then it may be that the deceleration control system issues a demand for 9.5 braking of both sides (a level of 19.0 in total), whereas the heading control system issues a demand for +2.0 braking on the port side and -2.0 on the starboard side. By giving full authority to heading control system it may be that the modified output demands are for level 6.0 braking on the port side and level 10.0 (maximum) braking on the starboard side, with as close to level 19.0 braking in total, the total output demand actually being 16.0. An alternative output might be for level 5.5 braking on the port side and level 9.5 (the amount actually requested by the deceleration control system on the port side) braking on the starboard side, with the total output demand being 15.0.

The control unit 426 continuously receives input data relating to the risk of lateral and longitudinal excursion 432. The control unit 426 continuously receives signals from the control mechanisms 430 indicating their current status. The control unit 426 will alter or remove the original authority limits in dependence on the risk of lateral and longitudinal runway excursion.

Scenario 5

The deceleration control system 462 determines that there is a low risk of longitudinal excursion as the deceleration rate achieved by the aircraft is sufficient to avoid a longitudinal overrun of the runway. The heading control system 460 determines that there is a low risk of lateral excursion as the rudder steering mechanisms and the nose-wheel steering mechanism have the capability to control the aircraft laterally without the use of any differential braking. The control unit 426 receives a lateral input demand 420 from the heading control system 460. The control unit 426 receives a longitudinal input demand 422 from the deceleration control system 462. The control unit 426 passes the lateral input demand 420 and the longitudinal input demand 422 directly to the control mechanisms 430. Both the heading control system 460 and the deceleration control system 462 maintain full authority over the control mechanisms 430 as no authority limits are imposed by the control unit 426. Thus, at this stage in the scenario, $\alpha = \gamma = \beta = \delta = 100\%$.

There is then a failure that causes loss of the rudder steering mechanism 436. The deceleration control system 462 determines that there is still a low risk of longitudinal excursion as the deceleration rate of the aircraft is sufficient to avoid a longitudinal overrun of the runway. The heading control system 460 determines that there is a high risk of lateral runway excursion. The heading control system 460 is demanding a high level of differential braking in order to maintain the lateral position of the aircraft along the runway. The control unit 426 receives the lateral input demand 420 from the heading control system 460 and the longitudinal input demand 422 from the deceleration control system 462. The control unit 426 applies authority limits to the demands from the heading control system 460 and the deceleration control system 462. The authority limits are determined by the control unit 426 based on the risk of lateral runway excursion and the risk of longitudinal runway excursion 432. Given the high risk of lateral runway excursion the control unit applies authority limits that prioritises the authority of the heading control system 460 and effectively blocks the authority of the deceleration control system to send demands to the starboard wheel brake 438 and the port wheel brake 440, insofar as it would conflict with the authority of the heading control system 460. The wheel brakes receive the full level of differential braking demanded as the control unit 426 has given full authority to the heading control system 460. Thus, at this stage in the scenario, $\alpha = \gamma = 100\%$ and $\beta < 100\%$ and $\delta < 100\%$.

The blocking of longitudinal control with time will of course generate a higher risk of a longitudinal excursion, and as speed drops control of lateral movement with the rudder becomes less efficient, but steering (by the nose wheel) remains available. This could lead to the control unit effectively deeming there to be a medium risk of longitudinal excursion (at a speed of above, say 25 knots) as the deceleration rate achieved is insufficient to avoid an overrun. As the risk of longitudinal excursion increases, the blocking of longitudinal control is gradually released, despite there remaining a relatively high risk of lateral excursion (at a speed of say 35 knots). At such predicted speeds of excursion, the ratio of authority / priority given to the longitudinal:lateral control may be subject to a similar ratio with higher priority being given towards lateral control (25:35 for example for longitudinal:lateral control). This will mean that the differential control commanded by the lateral component of the control system will receive greater priority, insofar as there is a conflict with longitudinal braking, whereas the authority given to the longitudinal control will be given less priority insofar as there is a conflict with longitudinal braking - the ratio of priority granted being consistent with a ratio of 25:35. This will mean that $0 < \alpha < 100\%$, $0 < \beta < 100\%$, $0 < \gamma < 100\%$, and $0 < \delta < 100\%$.

The control unit 426 applies these authority limits to the demands from the heading control system 460 and the deceleration control system 462, thus giving greater priority to the heading control system 460 than the deceleration control system 462. The control unit 426 sends an output demand to the port wheel brake 440 and the starboard wheel brake of the aircraft, where the output demand is calculated as a weighted summation of the lateral input demand 420 received from the heading control system 460 and the longitudinal input demand 422 received from the deceleration control system 462.

As an alternative to this example, the control unit could deem that the risks (including risk of negative consequences) associated with a lateral excursion are significantly greater at aircraft speeds of more than 60knots and where the risks associated with a longitudinal excursion are significantly greater at aircraft speeds of more than 30knots. In other words, at certain speeds it may be better to reduce the chance of a longitudinal excursion than reduce the chance of a lateral excursion. The ratio of longitudinal:lateral authority may be based on the ratio of (predicted longitudinal excursion speed + 30 knots) : (predicted lateral excursion speed). Another option is for the ratio of longitudinal:lateral authority to be based on the ratio of P:Q, where

P = 0, if predicted longitudinal excursion speed is less than 30 knots and otherwise P = predicted longitudinal excursion speed minus 30 knots and
Q = 0, if predicted lateral excursion speed is less than 60 knots and otherwise
Q = predicted lateral excursion speed minus 60 knots.

The ratio of $\beta : \alpha$ and of $\delta : \gamma$ will depend on the ratio of longitudinal authority:lateral authority, but need not necessarily be mathematically equal to the ratio of longitudinal:lateral authority.

Scenario 6

In this scenario, the deceleration control system 462 initially determines that there is a low risk of longitudinal excursion as the deceleration rate achieved by the aircraft is sufficient to avoid a longitudinal overrun of the runway. The heading control system 460 determines that there is a low risk of lateral excursion as the rudder steering mechanisms and the nose-wheel steering mechanism have the capability to control the aircraft laterally without the use of any differential braking. The control unit 426 receives a lateral input demand 420 from the heading control system 460. The control unit 426 receives a longitudinal input demand 422 from the deceleration control system 462. The control unit 426 passes the lateral input demand 420 and the longitudinal input demand 422 directly to the control mechanisms 430. Both the heading control system 460 and the deceleration control system 462 maintain full authority over the control mechanisms 430 as no authority limits are imposed by the control unit 426. Thus, at this stage in the scenario, $\alpha = \gamma = \beta = \delta = 100\%$.
There is then a failure (e.g. all tyres on the port-side burst) causing the port-side wheel brakes 440 to cease to function, leading to a high level of asymmetry when braking and a reduction in the braking force that is provided by the wheel brakes, given that only 50% of the wheels are braking.
The deceleration control system 462 determines that there is a medium risk of longitudinal excursion as the deceleration rate achieved by the aircraft is insufficient to avoid longitudinal overrun of the runway. The heading control system 460 is demanding a high level of lateral control in order to avoid lateral excursion of the runway. The heading control system 460 thus determines that there is a medium risk of lateral runway excursion. The control unit 426 compares the risk of longitudinal runway excursion with the risk of lateral runway excursion to determine a ratio of control authority as between the heading control system 460 and the deceleration control system 462. The control unit 426 receives the lateral input demand 420 from the heading control system 460 and the longitudinal input demand 422 from the deceleration control system 462. The control unit 426 applies authority limits to the demands from the heading control system 460 and the deceleration control system 462 in the ratio as determined by the risk of longitudinal runway excursion and the risk of lateral runway excursion. The control unit 426 sends an output demand to the starboard-side wheel brake 438 (the port-side wheel brake being rendered inoperable) of the aircraft, where the output demand is calculated as a weighted summation of the lateral input demand 420 received from the heading control system 460 and the longitudinal input demand 422 received from the deceleration control system 462. The control unit 426 also sends other demands to other control mechanisms of the aircraft in a similar manner, balancing the need to decelerate, yet not veer off the runway, and limiting the authority of the heading control system 460 and the deceleration control system 462, in dependence on the ratio of the risk of a longitudinal runway excursion to the risk of a lateral runway excursion.
Thus it will be appreciated that because both port tyres have burst, the heading control system 460 might issue a demand to release completely the starboard side brakes in order to maintain a straight heading and remove the asymmetry in braking. In this case, fully releasing the starboard brakes might result in a longitudinal excursion at significant speed. Thus, if the heading control system 460 were allowed full authority causing the brakes to be fully released (and thus minimise the risk of a lateral excursion) this would have the undesirable knock-on effect, at overall aircraft level, of causing a longitudinal excursion. Similarly, the deceleration control system 462 might issue a demand to apply the starboard brakes at their maximum level given that 50% of the wheel brake function has been lost. This though might inevitably lead to a lateral excursion.
In this scenario it might be estimated that the likely maximum longitudinal excursion speed will be 70 knots (in the event that full authority is given to the lateral control with authority being given to the longitudinal control only insofar as it does not conflict with the lateral control), and the likely maximum lateral excursion speed will be 80 knots (in the event that full authority is given to the longitudinal control with authority being given to the lateral control only insofar as it does not conflict with the longitudinal control), giving a risk ratio of 70:80. This then means that the differential control commanded by the heading control system 460 is prioritised slightly over the longitudinal control commanded by the deceleration control system 462. Thus some braking is applied to the starboard brakes, giving some deceleration - but probably not enough to remove all risk of a longitudinal excursion and probably causing more asymmetry than can be balanced completely by lateral control provided by the other control mechanisms on the aircraft (i.e. rudder and nose wheel steering) thus introducing non-negligible risk of a lateral excursion. However, by appropriate balancing of the authority given to the heading control system 460 as compared to the deceleration control system 462 the overall risk of runway excursion is managed effectively. Rather than a longitudinal excursion at 70 knots or a lateral excursion at 80 knots, it might be that the aircraft suffers a ~30 knot excursion on the corner of the runway. The output demand provided by the control unit 426 thus minimises the overall risk of longitudinal excursion and lateral excursion.

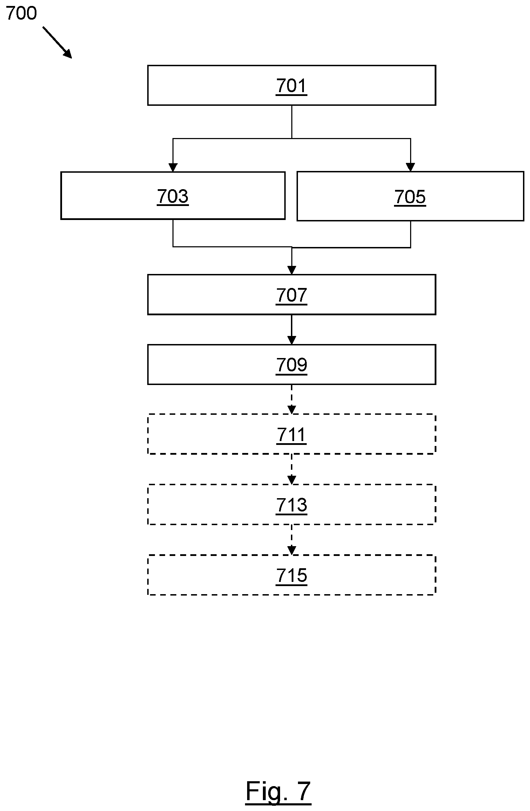

Figure 7 shows a flow diagram 700 showing an example of a method for automatically controlling ground manoeuvres of an aircraft according to another embodiment of the invention. The method comprises the following steps. The aircraft moves along a runway surface (represented by box 701). The control unit receives a lateral input demand (represented by box 703) and receives a longitudinal input demand (represented by box 705). The control unit calculates an output demand (represented by box 707), the control unit passing the output demand to one or more control mechanisms of the aircraft (represented by box 709). According to some embodiments the step of calculating the output demand 707 includes prioritising the demands received when there is a conflict between those demands. The prioritisation is based on the risk of lateral runway excursion and the risk of longitudinal runway excursion.

According to another embodiment, the method for automatically controlling ground manoeuvres of an aircraft additionally comprises the following steps. The control unit sends an output demand to one or more first steering control mechanisms (box 709), the first steering control mechanisms being a rudder steering mechanism and a nose wheel steering mechanism. The control unit receiving data from sensors on board the aircraft that indicates that the first steering control mechanism is not fulfilling the output demand (represented by box 711). The control unit calculates an output demand in dependence on the lateral and longitudinal input demands (represented by box 713), the control unit then passing an output demand to the wheel brakes of the aircraft (represented by box 715). The control unit calculates the output demand by prioritising the demands received when there is a conflict between those demands. The prioritisation depends on the risk of lateral runway excursion and the risk of longitudinal runway excursion.

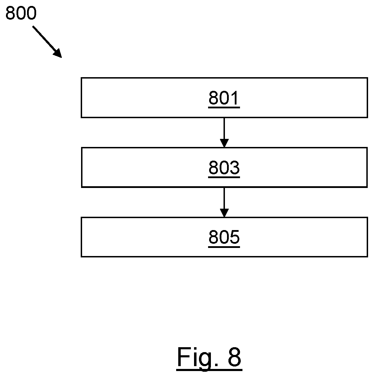

Figure 8 shows a flow diagram 800 showing an example of a method for automatically controlling ground manoeuvres of an aircraft according to another embodiment of the invention. The method includes the following steps: controlling the lateral motion of the aircraft relative to a runway with a first control system 801; controlling the longitudinal motion of the aircraft relative to a runway with a second control system 803; and resolving a conflict between the first control system and the second control system by means of apportioning control of the motion of the aircraft on the basis of balancing a risk associated with an excursion of the aircraft from the runway laterally and a risk associated with an excursion of the aircraft from the runway longitudinally 805. The method may include the control unit determining that there is a conflict between the lateral input demand and the longitudinal input demand by determining (e.g. by calculating) that the combination of the lateral demand and the longitudinal demand cannot be fulfilled by the control mechanisms of the aircraft that are available for use at that particular time.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The weighting of the outputs relative to the input demands, insofar as wheel braking is concerned, may be expressed differently and instead be as follows (although this may have little or no impact on the actual level of braking applied at the wheels in the various scenarios mentioned above):

$$\mathrm{OUT_{Star}} = \alpha\, \mathrm{LAT\_DEM_{Star}} + \beta\, \mathrm{LON\_DEM_{Star}}$$

$$\mathrm{OUT_{Port}} = \gamma\, \mathrm{LAT\_DEM_{Port}} + \delta\, \mathrm{LON\_DEM_{Port}}$$

where:

$\mathrm{OUT_{Star}}$ is the output demand of wheel braking on the starboard side, which is less than or equal to the full amount of braking possible on the starboard side,

$\mathrm{OUT_{Port}}$ is the output demand of braking on the port side, which is less than or equal to the full amount of braking possible on the port side,

$\mathrm{LAT\_DEM_{Star}}$ is the amount of braking on the starboard side that would be provided if full authority were given to demands for lateral control, while granting the maximum authority possible to longitudinal control to the extent that it does not conflict with the demands for lateral control,

$\mathrm{LAT\_DEM_{Port}}$ is the amount of braking on the port side that would be provided if full authority were given to demands for lateral control, while granting the maximum authority possible to longitudinal control to the extent that it does not conflict with the demands for lateral control,

$\mathrm{LON\_DEM_{Star}}$ is the amount of braking on the starboard side that would be provided if full authority were given to demands for longitudinal control, while granting the maximum authority possible to lateral control to the extent that it does not conflict with the demands for longitudinal control,

$LON\_DEM_{Port}$ is the amount of braking on the port side that would be provided if full authority were given to demands for longitudinal control, while granting the maximum authority possible to lateral control to the extent that it does not conflict with the demands for longitudinal control, and

$\alpha$, $\beta$, $\gamma$, $\delta$ are weighting factors, such that $\alpha + \beta = 100\%$ and $\gamma + \delta = 100\%$ and the ratio $(\alpha + \gamma) : (\beta + \delta)$ is a measure of the weighting of the lateral demand versus the longitudinal demand. In such a case, the ratio $(\alpha + \gamma) : (\beta + \delta)$ may be equal to the ratio of P:Q mentioned above. Also, when there is no conflict present between the lateral demands and the longitudinal demands, the weighting factors may be arbitrarily set at $\alpha = \beta = \gamma = \delta = 50\%$ (but could equally be $\alpha = \gamma = 100\%$ and $\beta = \delta = 0\%$, without any change to the output demands, given that there is no conflict present).

While a heading control system, a deceleration control system and a control unit have been described as three separate systems which collectively determine lateral control and longitudinal control of the aircraft by issuing demands to the control mechanisms of the aircraft that are modified in order to better manage the risks associated with a possibly runway excursion, laterally and / or longitudinally, the functions could be combined or separated in hardware and/or software systems on the aircraft in a different manner than stated above in relation to the described embodiments. For example, one appropriate programmed computer system with appropriate inputs, outputs and software, may perform the function of all such systems and the control unit. It may also be that the control unit calculates the risk of excursion, not the heading control system, the deceleration control system, or other system of the aircraft.

There may be more systems competing for authority than described above. For example, there may be an auto-land system, a heading control system and an auto-brake system with anti-skid control all of which might have competing (and possibly conflicting) demands of the wheel brakes for example.

There may be examples where one demand is completely blocked in preference to the other. It may be beneficial instead to have more variable control, thus instead of blocking control entirely, significantly limiting control. Such a limit / blocking of demand would still be based on an assessment of the risk of lateral runway excursion and the risk of longitudinal runway excursion.

The term 'or' shall be interpreted as 'and/or' unless the context requires otherwise.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

**Claims**

1.  An aircraft ground manoeuvre control unit (226) for an aircraft (101);

    the aircraft (101) having a plurality of control mechanisms (230) for controlling motion of the aircraft (101);
    the aircraft (101) having at least two wheels; and
    the control mechanisms (230) including at least two wheel brakes;

    wherein:

    the control unit (226) is configured to receive lateral input demands (220), being demands concerning lateral motion of the aircraft (101), and longitudinal input demands (222), being demands concerning longitudinal motion of the aircraft (101); and
    the control unit (226) is configured to pass on the lateral input demands (220) and longitudinal input demands (222) as output demands (228) to the relevant control mechanisms (230) of the aircraft (101);
    **CHARACTERISED IN THAT**
    the control unit (226) is configured:

    to determine a risk of lateral runway excursion (232);
    to determine a risk of longitudinal runway excursion (232); and
    to pass on the output demands (228) with a modification derived by prioritising a part of the input demands (220), (222) based on the risk of lateral runway excursion (232) and the risk of longitudinal runway excursion (232).

**2.** The aircraft ground manoeuvre control unit (226) of claim 1, wherein the control unit is configured to pass on the output demand (228) to the wheel brakes by prioritising the lateral input demand (220) and longitudinal input demand (222) based on:

the availability of other control mechanisms (230) on the aircraft (101), and
the risk of lateral runway excursion (232) and the risk of longitudinal runway excursion (232).

**3.** The aircraft ground manoeuvre control unit (226) of claim 1 or claim 2, wherein the control unit is configured to receive input data (350) relating to the current state of the control mechanisms (230) of the aircraft (101) and/or is configured to output a demand to the starboard and port wheel brakes that is a summation of the lateral input demand (220) and the longitudinal input demand (222).

**4.** The aircraft ground manoeuvre control unit (226) according to any preceding claim,
wherein the control unit is configured to identify when the lateral input demand (220) is in conflict with the longitudinal input demand (222) and/or when the lateral input demand and the longitudinal input demand cannot be fully met by the control mechanisms (230) of the aircraft (101).

**5.** The aircraft ground manoeuvre control unit (226) according to any preceding claim,
wherein the control unit is configured to determine the risk of lateral excursion (232) and the risk of longitudinal excursion (232) based on:

one or more measures of the speed of the aircraft;
a distance between the aircraft and an edge of a runway in the lateral direction; and
a distance between the aircraft and an edge of the runway in the longitudinal direction.

**6.** The aircraft ground manoeuvre control unit (226) according to any preceding claim,
wherein the control unit is configured to determine the risk of lateral excursion (232) and the risk of longitudinal excursion (232) based on:

the response required by the control mechanisms (230) to meet the lateral input demand (220);
the response required by the control mechanisms to meet the longitudinal input demand (222); and
whether the response required to meet the lateral demand and the longitudinal demand simultaneously is within the capability of the control mechanisms of the aircraft.

**7.** The aircraft ground manoeuvre control unit (226) according to any preceding claim,
wherein the control unit is configured to provide prioritisation (224) by applying a limit on the authority of one input demand over the other input demand.

**8.** The aircraft ground manoeuvre control unit (226) according to any preceding claim,
wherein the control unit is configured to balance the risk of longitudinal excursion (232) and the risk of lateral excursion (232) to calculate the output demand (228) that will minimise the overall risk.

**9.** The aircraft ground manoeuvre control unit (226) according to any preceding claim,
wherein the control unit is configured:

to receive a lateral input demand (703);
to send an output demand (707) to one or more first steering control mechanisms (709), the first steering control mechanisms being a rudder steering mechanism and / or a nose-wheel steering mechanism;
to determine that at least one of the first steering control mechanisms is not fulfilling the output demand (711); and
as a consequence of determining that at least one of the first steering control mechanisms is not fulfilling the output demand, to send an output demand to one or more of a port wheel brake and a starboard wheel brake (715).

**10.** The aircraft ground manoeuvre control unit (226) according to any preceding claim,
wherein the control unit receives input demands from a first control system (460), for example a heading control system, and a second control system (462), for example a deceleration control system; wherein

the control unit is configured to receive lateral input demands (420) from the first control system; and
the control unit is configured to receive longitudinal input demands (422) from the second control system.

**11.** The aircraft ground manoeuvre control unit (226) according to claim 10, wherein

the control unit is configured to apply authority limits to the first control system (460) in relation to the second control system (462), and
the control unit calculates the authority limits based on the risk of lateral runway excursion (232) and the risk of longitudinal runway excursion (232).

**12.** An aircraft having a ground manoeuvre control unit (226) according to any preceding claim and, optionally, wherein the control unit is part of an auto-land system, wherein the auto-land system includes a heading control system and a deceleration control system.

**13.** A method for automatically controlling ground manoeuvres of an aircraft (101), wherein the method comprises:

the aircraft (101) moving along a runway surface;
a control unit (326) receiving a lateral input demand (320); and
the control unit (326) receiving a longitudinal input demand (322);
**CHARACTERISED BY**
the control unit (226) determining a risk of lateral runway excursion (232) and determining a risk of longitudinal runway excursion (232),
the control unit (326) calculating an output demand (328) in dependence on the lateral and longitudinal input demands (320), (322), prioritising the demands received when there is a conflict between those demands, the prioritisation (324) depending on the risk of lateral runway excursion (232) so determined by the control unit and the risk of longitudinal runway excursion (232) so determined by the control unit; and
the control unit (326) passing an output demand (328) to one or more control mechanisms (330) of the aircraft (101) and, optionally,
(A) wherein prioritising the demands involves the control unit (326) applying a limit on the authority of one demand over the other demand based on the risk of lateral runway excursion (332) and the risk of longitudinal runway excursion (332); and/or
(B) wherein the control unit (326) determines that there is a conflict between the lateral input demand (320) and the longitudinal input demand (322) by calculating that the combination of the lateral and the longitudinal demand cannot be fulfilled by the control mechanisms (330) of the aircraft.

**14.** The method for automatically controlling ground manoeuvres of an aircraft (101) according to claim 13, wherein the method comprises:

the control unit (326) sending an output demand (328) to one or more first steering control mechanisms, the first steering control mechanisms being a rudder steering mechanism (336) and a nose-wheel steering mechanism (334);
the control unit (326) receiving data from sensors on board the aircraft (101) that indicates that the first steering control mechanism is not fulfilling the output demand;
the control unit (326) calculating an output demand (328) in dependence on the lateral and longitudinal input demands (320), (322), prioritising the demands received when there is a conflict between those demands, the prioritisation (324) depending on the risk of lateral runway excursion (332) and the risk of longitudinal runway excursion (332);
the control unit (326) passing an output demand (328) to the wheel brakes (338), (340) of the aircraft (101).

**15.** A computer program product comprising instructions which, when the program is executed by a computer, cause the computer to perform the function of the control unit (226) of any of claims 1 to 13 and/or to perform one or more of the steps of the method of claim 13 or 14.

**Patentansprüche**

**1.** Flugzeugbodenmanöversteuereinheit (226) für ein Flugzeug (101);

wobei das Flugzeug (101) mehrere Steuermechanismen (230) zum Steuern der Bewegung des Flugzeugs (101) aufweist; wobei das Flugzeug (101) mindestens zwei Räder aufweist und
wobei die Steuermechanismen (230) mindestens zwei Radbremsen umfassen;

wobei:

die Steuereinheit (226) dazu ausgelegt ist, laterale Eingabebefehle (220), die Befehle sind, welche die laterale Bewegung des Flugzeugs (101) betreffen, und Längseingabebefehle (222), die Befehle sind, welche die Längsbewegung des Flugzeugs (101) betreffen, zu empfangen; und

die Steuereinheit (226) dazu ausgelegt ist, die lateralen Eingabebefehle (220) und Längseingabebefehle (222) als Ausgabebefehle (228) an die jeweiligen Steuermechanismen (230) des Flugzeugs (101) weiterzuleiten;

**DADURCH GEKENNZEICHNET, DASS**

die Steuereinheit (226) dazu ausgelegt ist:

das Risiko einer lateralen Landebahnüberschreitung (232) zu bestimmen;

das Risiko einer Landebahnüberschreitung (232) in Längsrichtung zu bestimmen und

die Ausgabebefehle (228) mit einer durch das Priorisieren eines Teils der Eingabebefehle (220), (222) basierend auf dem Risiko einer lateralen Landebahnüberschreitung (232) und dem Risiko einer Landebahnüberschreitung (232) in Längsrichtung abgeleiteten Modifizierung weiterzuleiten.

2. Flugzeugbodenmanöversteuereinheit (226) nach Anspruch 1, wobei die Steuereinheit dazu ausgelegt ist, den Ausgabebefehl (228) durch Priorisieren des lateralen Eingabebefehls (220) und Längseingabebefehls (222) basierend auf Folgendem an die Radbremsen weiterzuleiten:

der Verfügbarkeit anderer Steuermechanismen (230) am Flugzeug (101) und

dem Risiko der lateralen Landebahnüberschreitung (232) und dem Risiko einer Landebahnüberschreitung (232) in Längsrichtung.

3. Flugzeugbodenmanöversteuereinheit (226) nach Anspruch 1 oder Anspruch 2, wobei die Steuereinheit dazu ausgelegt ist, Eingabedaten (350) bezüglich des aktuellen Zustands der Steuermechanismen (230) des Flugzeugs (101) zu empfangen, und/oder dazu ausgelegt ist, einen Befehl an die steuerbord- und bordseitige Radbremse auszugeben, der eine Summierung des lateralen Eingabebefehls (220) und des Längseingabebefehls (222) ist.

4. Flugzeugbodenmanöversteuereinheit (226) nach einem der vorstehenden Ansprüche, wobei die Steuereinheit dazu ausgelegt ist, zu identifizieren, wenn sich der laterale Eingabebefehl (220) und der Längseingabebefehl (222) widersprechen und/oder wenn der laterale Eingabebefehl und der Längseingabebefehl von den Steuermechanismen (230) des Flugzeugs (101) nicht vollständig erfüllbar sind.

5. Flugzeugbodenmanöversteuereinheit (226) nach einem der vorstehenden Ansprüche, wobei die Steuereinheit dazu ausgelegt ist, das Risiko einer lateralen Landebahnüberschreitung (232) und das Risiko einer Landebahnüberschreitung (232) in Längsrichtung basierend auf Folgendem zu bestimmen:

einem oder mehreren Messwerten der Geschwindigkeit des Flugzeugs;

der Entfernung zwischen dem Flugzeug und dem Rand einer Landebahn in laterale Richtung und

der Entfernung zwischen dem Flugzeug und dem Rand der Landebahn in Längsrichtung.

6. Flugzeugbodenmanöversteuereinheit (226) nach einem der vorstehenden Ansprüche, wobei die Steuereinheit dazu ausgelegt ist, das Risiko einer lateralen Landebahnüberschreitung (232) und das Risiko einer Landebahnüberschreitung (232) in Längsrichtung basierend auf Folgendem zu bestimmen:

der von den Steuermechanismen (230) erforderlichen Reaktion, um den lateralen Eingabebefehl (220) zu erfüllen;

der von den Steuermechanismen erforderlichen Reaktion, um den Längseingabebefehl (222) zu erfüllen; und

ob die zum gleichzeitigen Erfüllen des lateralen Befehls und des Längsbefehls erforderliche Reaktion innerhalb der Kapazität der Steuermechanismen des Flugzeugs liegt.

7. Flugzeugbodenmanöversteuereinheit (226) nach einem der vorstehenden Ansprüche, wobei die Steuereinheit dazu ausgelegt ist, eine Priorisierung (224) vorzusehen, indem eine Begrenzung für die Autorität eines Eingabebefehls über den anderen Eingabebefehl angewandt wird.

8. Flugzeugbodenmanöversteuereinheit (226) nach einem der vorstehenden Ansprüche, wobei die Steuereinheit dazu ausgelegt ist, das Risiko einer Landebahnüberschreitung (232) in Längsrichtung und das Risiko einer lateralen Landebahnüberschreitung (232) auszugleichen, um den Ausgabebefehl (228) zu berechnen, der das Gesamtrisiko verringert.

9. Flugzeugbodenmanöversteuereinheit (226) nach einem der vorstehenden Ansprüche, wobei die Steuereinheit dazu ausgelegt ist:

   einen lateralen Eingabebefehl zu erhalten (703);
   einen Ausgabebefehl an einen oder mehrere erste Lenksteuermechanismen (709) zu senden (707), wobei die ersten Lenksteuermechanismen ein Seitenruderlenkmechanismus und/oder ein Bugradlenkmechanismus sind;
   zu bestimmen, dass mindestens einer der ersten Lenksteuermechanismen den Ausgabebefehl nicht erfüllt (711); und
   als Folge des Bestimmens, das mindestens einer der ersten Lenksteuermechanismen den Ausgabebefehl nicht erfüllt, einen Ausgabebefehl an eine bordseitige Radbremse und/oder eine steuerbordseitige Radbremse zu senden (715).

10. Flugzeugbodenmanöversteuereinheit (226) nach einem der vorstehenden Ansprüche, wobei die Steuereinheit Eingabebefehle von einem ersten Steuersystem (460), zum Beispiel einem Spurhaltesteuersystem, und einem zweiten Steuersystem (462), zum Beispiel einem Bremssteuerungssystem, empfängt; wobei

   die Steuereinheit dazu ausgelegt ist, laterale Eingabebefehle (420) vom ersten Steuersystem zu empfangen; und
   die Steuereinheit dazu ausgelegt ist, Längseingabebefehle (422) vom zweiten Steuersystem zu empfangen.

11. Flugzeugbodenmanöversteuereinheit (226) nach Anspruch 10, wobei
   die Steuereinheit dazu ausgelegt ist, Autoritätsbegrenzungen auf das erste Steuersystem (460) in Bezug zum zweiten Steuersystem (462) anzuwenden, und die Steuereinheit die Autoritätsbegrenzungen basierend auf dem Risiko einer lateralen Landebahnüberschreitung (232) und dem Risiko einer Landebahnüberschreitung (232) in Längsrichtung berechnet.

12. Flugzeug mit einer Bodenmanöversteuereinheit (226) nach einem der vorstehenden Ansprüche und optional wobei die Steuereinheit Teil eines automatischen Landesystems ist, wobei das automatische Landesystem ein Spurhaltesteuersystem und ein Bremssteuerungssystem umfasst.

13. Verfahren zum automatischen Steuern von Bodenmanövern eines Flugzeugs (101), wobei das Verfahren Folgendes umfasst:

   das Flugzeug (101), das sich entlang einer Landebahnfläche bewegt;
   eine Steuereinheit (326), die einen lateralen Eingabebefehl (320) empfängt; und
   die Steuereinheit (326), die einen Längseingabebefehl (322) empfängt;
   **DADURCH GEKENNZEICHNET, DASS**
   die Steuereinheit (226) das Risiko einer lateralen Landebahnüberschreitung (232) und das Risiko einer Landebahnüberschreitung (232) in Längsrichtung bestimmt, die Steuereinheit (326) einen Ausgabebefehl (328) in Abhängigkeit von den lateralen und Längseingabebefehlen (320), (322) berechnet, wobei die Befehle priorisiert werden, die empfangen werden, wenn es einen Widerspruch zwischen diesen Befehlen gibt, wobei die Priorisierung (324) von dem Risiko einer lateralen Landebahnüberschreitung (232), das von der Steuereinheit bestimmt wird, und dem Risiko einer Landebahnüberschreitung (232) in Längsrichtung, das von der Steuereinheit bestimmt wird, abhängig ist; und
   die Steuereinheit (326) einen Ausgabebefehl (328) an einen oder mehrere Steuermechanismen (330) des Flugzeugs (101) weiterleitet und optional
   (A) wobei das Priorisieren der Befehle beinhaltet, dass die Steuereinheit (326) eine Begrenzung der Autorität eines Befehls über den anderen Befehl basierend auf dem Risiko einer lateralen Landebahnüberschreitung (332) und dem Risiko einer Landebahnüberschreitung (332) in Längsrichtung anwendet; und/oder
   (B) wobei die Steuereinheit (326) bestimmt, dass es einen Widerspruch zwischen dem lateralen Eingabebefehl (320) und dem Längseingabebefehl (322) gibt, mittels Berechnen, dass die Kombination des lateralen und Längsbefehls nicht von den Steuermechanismen (330) des Flugzeugs erfüllbar sind.

14. Verfahren zum automatischen Steuern von Bodenmanövern eines Flugzeugs (101) nach Anspruch 13, wobei das Verfahren Folgendes umfasst:

Senden eines Ausgabebefehls (328) an einen oder mehrere erste Lenksteuermechanismen durch die Steuereinheit (326), wobei die ersten Lenksteuermechanismen ein Seitenruderlenkmechanismus (336) und/oder ein Bugradlenkmechanismus (334) sind;

Empfangen von Daten von Sensoren an Bord des Flugzeugs (101) durch die Steuereinheit (326), die angeben, dass der erste Lenksteuermechanismus den Ausgabebefehl nicht erfüllt;

Berechnen eines Ausgabebefehls (328) in Abhängigkeit von lateralen und Längseingabebefehlen (320), (322) durch die Steuereinheit (326), wobei die Befehle priorisiert werden, die empfangen werden, wenn es einen Widerspruch zwischen diesen Befehlen gibt, wobei die Priorisierung (324) von dem Risiko einer lateralen Landebahnüberschreitung (332) und dem Risiko einer Landebahnüberschreitung (332) in Längsrichtung abhängig ist;

Weiterleiten eines Ausgabebefehls (328) an die Radbremsen (338), (340) des Flugzeugs (101) durch die Steuereinheit (326) .

15. Computerprogrammprodukt, Anweisungen umfassend, die bei Ausführung des Programms durch einen Computer bewirken, dass der Computer die Funktion der Steuereinheit (226) nach einem der Ansprüche 1 bis 13 ausführt, und/oder einen oder mehrere der Schritte des Verfahrens nach Anspruch 13 oder 14 ausführt.

## Revendications

1. Unité de commande de manœuvres au sol d'aéronef (226) pour un aéronef (101) ;

   l'aéronef (101) ayant une pluralité de mécanismes de commande (230) destinés à commander le mouvement de l'aéronef (101) ;
   l'aéronef (101) ayant au moins deux roues ; et
   les mécanismes de commande (230) incluant au moins deux freins de roue ;
   dans laquelle :

   l'unité de commande (226) est configurée pour recevoir des demandes d'entrée latérales (220), qui sont des demandes concernant un mouvement latéral de l'aéronef (101), et des demandes d'entrée longitudinales (222), qui sont des demandes concernant un mouvement longitudinal de l'aéronef (101) ; et
   l'unité de commande (226) est configurée pour transmettre les demandes d'entrée latérales (220) et les demandes d'entrée longitudinales (222), en tant que demandes de sortie (228), aux mécanismes de commande pertinents (230) de l'aéronef (101) ;
   **caractérisée en ce que**
   l'unité de commande (226) est configurée :

   pour déterminer un risque d'excursion latérale de piste (232) ;
   pour déterminer un risque d'excursion longitudinale de piste (232) ; et
   pour transmettre les demandes de sortie (228) avec une modification dérivée en classant par ordre de priorité une partie des demandes d'entrée (220), (222) sur la base du risque d'excursion latérale de piste (232) et du risque d'excursion longitudinale de piste (232).

2. Unité de commande de manœuvres au sol d'aéronef (226) de la revendication 1, dans laquelle l'unité de commande est configurée pour transmettre la demande de sortie (228) aux freins de roue en classant par ordre de priorité la demande d'entrée latérale (220) et la demande d'entrée longitudinale (222) sur la base :

   de la disponibilité d'autres mécanismes de commande (230) sur l'aéronef (101), et
   du risque d'excursion latérale de piste (232) et du risque d'excursion longitudinale de piste (232).

3. Unité de commande de manœuvres au sol d'aéronef (226) de la revendication 1 ou de la revendication 2, dans laquelle l'unité de commande est configurée pour recevoir des données d'entrée (350) concernant l'état actuel des mécanismes de commande (230) de l'aéronef (101) et/ou est configurée pour envoyer en sortie une demande aux freins de roues gauche et droit qui est une sommation de la demande d'entrée latérale (220) et de la demande d'entrée longitudinale (222).

4. Unité de commande de manœuvres au sol d'aéronef (226) selon une quelconque revendication précédente, dans laquelle l'unité de commande est configurée pour identifier l'instant auquel la demande d'entrée latérale (220) est en conflit avec la demande d'entrée longitudinale (222) et/ou l'instant auquel la demande d'entrée latérale et la demande d'entrée longitudinale ne peuvent pas être complètement respectée par les mécanismes de commande (230) de l'aéronef (101).

5. Unité de commande de manœuvres au sol d'aéronef (226) selon une quelconque revendication précédente, dans laquelle l'unité de commande est configurée pour déterminer le risque d'excursion latérale (232) et le risque d'excursion longitudinale (232) sur la base :

d'une ou de plusieurs mesures de la vitesse de l'aéronef ;
d'une distance entre l'aéronef et un bord d'une piste dans la direction latérale ; et
d'une distance entre l'aéronef et un bord de la piste dans la direction longitudinale.

6. Unité de commande de manœuvres au sol d'aéronef (226) selon une quelconque revendication précédente, dans laquelle l'unité de commande est configurée pour déterminer le risque d'excursion latérale (232) et le risque d'excursion longitudinale (232) sur la base :

de la réponse requise par les mécanismes de commande (230) pour respecter la demande d'entrée latérale (220) ;
de la réponse requise par les mécanismes de commande pour respecter la demande d'entrée longitudinale (222) ; et
du fait que la réponse requise pour respecter la demande latérale et la demande longitudinale est ou non simultanément au sein de la capacité des mécanismes de commande de l'aéronef.

7. Unité de commande de manœuvres au sol d'aéronef (226) selon une quelconque revendication précédente, dans laquelle l'unité de commande est configurée pour fournir un classement par ordre de priorité (224) en appliquant une limite sur l'autorité d'une demande d'entrée par rapport à l'autre demande d'entrée.

8. Unité de commande de manœuvres au sol d'aéronef (226) selon une quelconque revendication précédente, dans laquelle l'unité de commande est configurée pour équilibrer le risque d'excursion longitudinale (232) et le risque d'excursion latérale (232) pour calculer la demande de sortie (228) qui minimisera le risque total.

9. Unité de commande de manœuvres au sol d'aéronef (226) selon une quelconque revendication précédente, dans laquelle l'unité de commande est configurée :

pour recevoir une demande d'entrée latérale (703) ;
pour envoyer une demande de sortie (707) à un ou plusieurs premiers mécanismes de commande d'orientation (709), les premiers mécanismes de commande d'orientation étant un mécanisme d'orientation de gouverne de direction et / ou un mécanisme d'orientation de train avant ;
pour déterminer qu'au moins un des premiers mécanismes de commande d'orientation ne respecte pas la demande de sortie (711) ; et
en conséquence de la détermination qu'au moins un des premiers mécanismes de commande d'orientation ne respecte pas la demande de sortie, pour envoyer une demande de sortie à un ou plusieurs freins d'un frein de roue droit et d'un frein de roue gauche (715).

10. Unité de commande de manœuvres au sol d'aéronef (226) selon une quelconque revendication précédente, dans laquelle l'unité de commande reçoit des demandes d'entrées en provenance d'un premier système de commande (460), par exemple d'un système de commande de cap, et d'un second système de commande (462), par exemple d'un système de commande de décélération ; dans laquelle

l'unité de commande est configurée pour recevoir des demandes d'entrée latérales (420) en provenance du premier système de commande ; et
l'unité de commande est configurée pour recevoir des demandes d'entrée longitudinales (422) en provenance du second système de commande.

11. Unité de commande de manœuvres au sol d'aéronef (226) selon la revendication 10, dans laquelle l'unité de commande est configurée pour appliquer des limites d'autorité au premier système de commande (460) relativement au second système de commande (462), et
l'unité de commande calcule les limites d'autorité sur la base du risque d'excursion latérale de piste (232) et du risque d'excursion longitudinale de piste (232).

12. Aéronef ayant une unité de commande de manœuvres au sol (226) selon une quelconque revendication précédente, et, facultativement, dans lequel l'unité de commande fait partie d'un système d'atterrissage automatique, dans lequel le système d'atterrissage automatique inclut un système de commande de cap et un système de commande de décélération.

13. Procédé pour commander automatiquement des manœuvres au sol d'un aéronef (101), dans lequel le procédé comprend :

l'aéronef (101) se déplaçant le long d'une surface de piste ;
une unité de commande (326) recevant une demande d'entrée latérale (320) ; et
l'unité de commande (326) recevant une demande d'entrée longitudinale (322) ;
**caractérisé par**
l'unité de commande (226) déterminant un risque d'excursion latérale de piste (232) et déterminant un risque d'excursion longitudinale de piste (232),
l'unité de commande (326) calculant une demande de sortie (328) en fonction de demandes d'entrées latérale et longitudinale (320), (322), classant par ordre de priorité les demandes reçues lorsqu'il y a un conflit entre ces demandes, le classement par ordre de priorité (324) dépendant du risque d'excursion latérale de piste (232) ainsi déterminé par l'unité de commande et du risque d'excursion longitudinale de piste (232) ainsi déterminé par l'unité de commande ; et
l'unité de commande (326) transmettant une demande de sortie (328) à un ou plusieurs mécanismes de commande (330) de l'aéronef (101) et, facultativement,
(A) dans lequel le classement par ordre de priorité des demandes implique l'application, par l'unité de commande (326), d'une limite sur l'autorité d'une demande par rapport à l'autre demande sur la base du risque d'excursion latérale de piste (332) et du risque d'excursion longitudinale de piste (332) ; et/ou
(B) dans lequel l'unité de commande (326) détermine qu'il y a un conflit entre la demande d'entrée latérale (320) et la demande d'entrée longitudinale (322) en calculant que la combinaison de la demande latérale et de la demande longitudinale ne peut pas être respectée par les mécanismes de commande (330) de l'aéronef.

14. Procédé pour commander automatiquement des manœuvres au sol d'un aéronef (101) selon la revendication 13, dans lequel le procédé comprend :

l'unité de commande (326) envoyant une demande de sortie (328) à un ou à plusieurs premiers mécanismes de commande d'orientation, les premiers mécanismes de commande d'orientation étant un mécanisme d'orientation de gouverne de direction (336) et un mécanisme d'orientation de train avant (334) ;
l'unité de commande (326) recevant des données en provenance de capteurs à bord l'aéronef (101) qui indiquent que le premier mécanisme de commande d'orientation ne respecte pas la demande de sortie ;
l'unité de commande (326) calculant une demande de sortie (328) en fonction des demandes d'entrée latérales et longitudinale (320), (322), classant par ordre de priorité les demandes reçues lorsqu'il y a un conflit entre ces demandes, le classement par ordre de priorité (324) dépendant du risque d'excursion latérale de piste (332) et du risque d'excursion longitudinale de piste (332) ;
l'unité de commande (326) transmettant une demande de sortie (328) aux freins de roue (338), (340) de l'aéronef (101).

15. Produit programme d'ordinateur comprenant des instructions qui, lorsque le programme est exécuté par un ordinateur, amènent l'ordinateur à réaliser la fonction de l'unité de commande (226) de quelconques des revendications 1 à 13 et/ou à réaliser une ou plusieurs des étapes du procédé de la revendication 13 ou 14.

104

102

101

226

106a

106b

111a

111b

108

Fig. 1

Fig. 2

232 Risks of lat and long excursion

220 Lateral demand

222 Longitudinal demand

224 226 Prioritisation Control Unit

230 228 Control Mechanisms

Fig. 3

Fig. 4

Fig. 5

<u>Fig. 6</u>

EP 4 325 316 B1

700

701

703    705

707

709

711

713

715

Fig. 7

28

800

```
┌─────────────────────────────────────┐
│                 801                  │
└─────────────────────────────────────┘
                   │
                   ▼
┌─────────────────────────────────────┐
│                 803                  │
└─────────────────────────────────────┘
                   │
                   ▼
┌─────────────────────────────────────┐
│                 805                  │
└─────────────────────────────────────┘
```

## Fig. 8

**EP 4 325 316 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10081346 B
- US 8108086 B
- US 20220058970 A
- EP 3855269 A
- US 20210287560 A
- WO 2012145608 A
- US 8521365 B
- US 2008001471 A1
- EP 3118109 A1